# EUROPÄISCHE PATENTSCHRIFT

(11) **EP 1 185 454 B1**
(45) Veröffentlichungstag und Bekanntmachung des Hinweises auf die Patenterteilung: **29.03.2006**
(21) Anmeldenummer: 00938756.4
(22) Anmeldetag: 06.06.2000
(51) Int. Cl.: B64C 13/50, B64D 31/04, G05G 5/03, G05D 1/00

(54) **VORRICHTUNG ZUM STEUERN EINES TRIEBWERKES**
DEVICE FOR CONTROLLING AN ENGINE
DISPOSITIF POUR COMMANDER UN GROUPE MOTEUR

(30) Priorität: 11.06.1999 DE 19926800
(43) Veröffentlichungstag der Anmeldung: 13.03.2002
(73) Patentinhaber: Wittenstein AG, 97999 Igersheim (DE)
(72) Erfinder: HENLE, Jörg, 97990 Weikersheim (DE)
(74) Vertreter: Weiss, Peter
(86) Internationale Anmeldenummer: PCT/EP2000/005133
(87) Internationale Veröffentlichungsnummer: WO 2000/076842

(56) Entgegenhaltungen:
- EP-A- 0 875 451
- GB-A- 2 114 717
- US-A- 4 494 061

## Beschreibung

Die vorliegende Erfindung betrifft eine Vorrichtung zum Steuern eines Triebwerkes, insbesondere eines Flugzeuges mit zumindest einem Gashebel und einer Regelungseinrichtung zum zusätzlichen automatischen Antreiben des Gashebels, wobei eine Bewegung des Gashebels permanent, direkt oder indirekt auf ein Wegmesssystem übertragbar und der Gashebel über eine Führungsbuchse einer drehbaren Spindel linear bewegbar gelagert aufsitzt.

Derartige Vorrichtungen sind in vielfältiger Form und Ausführung auf dem Markt bekannt und gebräuchlich. Sie dienen insbesondere zum Steuern und Inbetriebnehmen eines Triebwerkes bspw. eines Flugzeuges.

Nachteilig an derartigen herkömmlichen Vorrichtungen ist, dass sie nicht genügend Sicherheit leisten, wenn bspw. im Betrieb mit einem Autopiloten der Stromkreis oder sogar der Regelungsmotor ausfällt.

Häufig ist dann nachteilig, dass der Pilot nicht erkennen kann, in welcher Lage und Position sich tatsächlich der Gashebel bzw. der Betriebszustand des Triebwerkes befindet.

Dies kann zu erheblichen unerwünschten Folgen, insbesondere auch zu Abstürzen von Flugzeugen führen.

Die GB 2 114 717 A offenbart eine Kontrollvorrichtung zum aktiven Antreiben bspw. eines Gashebels zur Steuerung von Flugzeugtriebwerken. Dabei steht der Gashebel mit einer Spindel in Eingriff, die eine geringe Steigung aufweist und selbsthemmend ausgebildet ist. Der Gashebel lässt sich lediglich aktiv über einen Antriebsmotor, welcher direkt oder indirekt mit der Spindel in Verbindung steht, antreiben. Nachteilig hieran ist, dass bei Stromausfall die Spindel, insbesondere der Gashebel, manuell nicht bewegbar bzw. antreibbar sind.

Die US 4,494,061 beschreibt eine Kontrolleinrichtung für ein Flugzeug, wobei über Motoren ein Gashebel aktiv bewegbar ist, um den aktuellen Betriebszustand eines Triebwerkes anzuzeigen.

Die EP 0 875 451 A2 offenbart eine elektronische Steuerungseinrichtung für Flugzeuge, bei welcher ein Handgriff mittels zwei Servomotoren aktiv hin und her bewegbar ist.

Der vorliegenden Erfindung liegt die Aufgabe zugrunde eine Vorrichtung der eingangs genannten Art zu schaffen mit welcher auf einfache, sichere und kostengünstige Weise eine Regelung und Steuerung eines Triebwerkes permanent manuell und/oder automatisch möglich ist.

Zur Lösung dieser Aufgabe führt, dass die Spindel als nicht selbsthemmende Spindel mit hoher Steigung ausgebildet ist und zur Unterstützung einer manuellen, linearen Bewegung des Gashebels die Regelungseinrichtung auf ein Signal eines Kraftsensors einschaltbar ist, und eine lineare, manuelle Bewegung des Gashebels auf ein Wegmesssystem mechanisch übertragbar ist, wobei eine lineare, mechanische und automatische Bewegung des Gashebels mechanisch an die Bewegung eines Wegemesssystems gekoppelt ist und der Kraftspeicher dem Gashebel und/oder der Führungsbuchse zugeordnet ist, wobei der Gashebel linear in einem Führungsschlitz eines Gehäuses geführt ist, welcher in etwa parallel zur Spindel angeordnet ist.

Bei der vorliegenden Erfindung sitzt der Gashebel auf einer Spindel, die über einen Regelungsmotor für einen Betrieb mittels Autopiloten antreibbar ist. Dann erkennt der Pilot in jeder Lage und Situation den aktuellen Zustand, insbesondere Betriebszustand des Triebwerkes.

Fällt bspw. dieser Regelungsmotor aus, so kann er manuell den Gashebel betätigen. Durch die Betätigung des Gashebels dreht sich eine Spindel, an deren Ende ein Wegmesssystem sitzt. Dieses Wegmesssystem übermittelt dann die entsprechende Information direkt oder indirekt über einen Rechner an das Triebwerk. Dann ist die Bewegung des Gashebels unabhängig vom Regelungsmotor.

Dabei soll im Rahmen der vorliegenden Erfindung liegen, auch andere Wegmesssysteme zu verwenden, die bspw. dazu geeignet sind, eine Drehbewegung oder eine Linearbewegung des Gashebels zu erkennen und in ein Signal umzuwandeln.

Dabei kann das Wegmesssystem induktiver, magnetischer und/oder optischer Art sein. Hier sei der Erfindung keine Grenze gesetzt.

Wichtig bei der vorliegenden Erfindung ist ferner, dass der Gashebel linear in einem Führungsschlitz oder entlang eines Führungselementes geführt ist, um mittels der Führungsbuchse, die im Eingriff mit der Spindel steht, eine Drehbewegung mit der Spindel zu erzeugen. Diese Drehbewegung der Spindel wird dann auf das Wegmesssystem übertragen.

Als besonders vorteilhaft hat sich erwiesen, eine Spindel als Trapez-Gewinde-Spindel zu verwenden, die eine hohe Steigung aufweist. Dies gewährleistet eine absolute Sicherheit gegen Selbsthemmung beim manuellen und/oder elektrischen Bewegung der Führungsbuchse, insbesondere des Gashebels im Führungsschlitz. Ferner haben derartige Trapez-Gewinde-Spindeln hohe Steifigkeiten, und keine Kippmomente. Diese sind zum linearen Präzisen führen geeignet. Zudem wird eine komplexe Bauweise auf sehr geringem Raum gewährleistet und ist sehr kostengünstig herzustellen.

Ferner ist von Vorteil bei der vorliegenden Erfindung, dass ohne elektrische Energie durch reine manuelle Bewegung des Gashebels in linearer Richtung die Spindel in Drehung versetzbar ist, wobei diese Drehung der Spindel auf das Wegmesssystem direkt übertragen wird. Dieses liefert dann die entsprechenden Signale zur Steuerung des Triebwerkes.

Hierdurch wird zusätzlich die Sicherheit zum Steuern und Inbetriebnehmen eines Triebwerkes erhöht.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte perspektivische Ansicht einer Vorrichtung zum Steuern eines Triebwerkes;
Figur 2 eine schematisch dargestellte Draufsicht auf eine weitere Vorrichtung zum Steuern eines Triebwerkes;
Figur 3 eine schematisch dargestellte Draufsicht auf ein weiteres Ausführungsbeispiel der Vorrichtung zum Steuern eines Triebwerkes gemäss den Figuren 1 und 2;
Figur 4 eine schematisch dargestellte Draufsicht auf ein weiteres Ausführungsbeispiel der Vorrichtung gemäss den Figuren 1 bis 3;
Figur 5 eine schematisch dargestellte Draufsicht auf ein weiteres Ausführungsbeispiel der Vorrichtung gemäss den Figuren 1 bis 4.

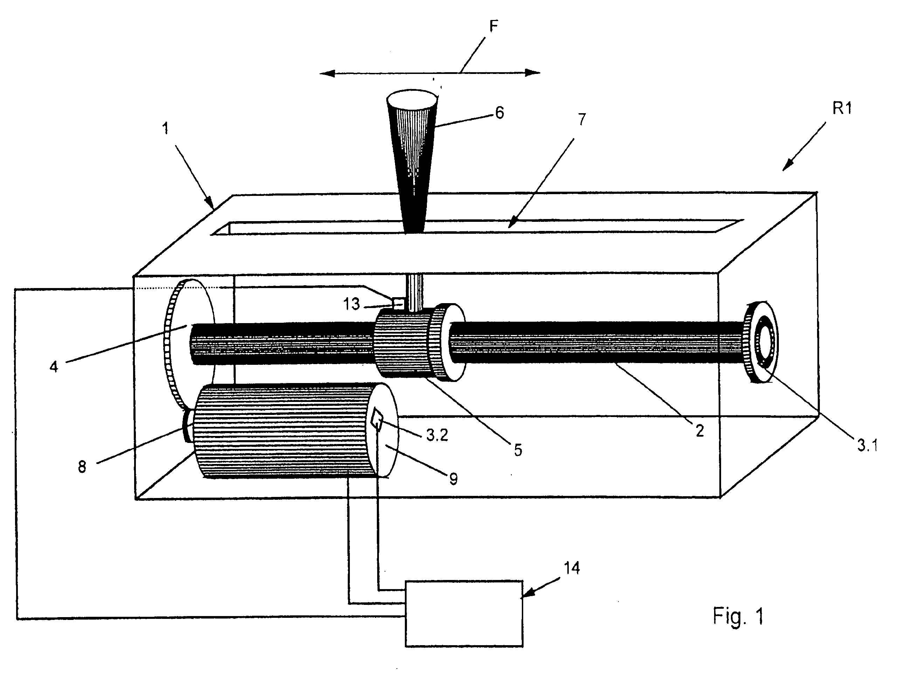

Gemäss Figur 1 weist eine erfindungsgemässe Vorrichtung R₁ zum Steuern eines hier nicht dargestellten Triebwerkes, insbesondere eines Flugzeuges ein Gehäuse 1 auf, in welchem vorzugsweise in seiner Längsrichtung eine Spindel 2 drehbar gelagert ist. Einends sitzt an der Spindel 2 ein Wegmesssystem 3.1 und andernends eine Antriebsscheibe 4.

Auf der Spindel 2 sitzt eine Führungsbuchse 5, die mit der Spindel 2 im Eingriff steht.

An die Führungsbuchse 5 schliesst ein Gashebel 6 an. Dieser ist in einem Führungsschlitz 7 das Gehäuse 1 linear geführt. Bevorzugt ist der Führungsschlitz 7 in etwa parallel zur Spindel 2 im Gehäuse 1 der Vorrichtung R₁ angeordnet.

An die Antriebsscheibe 4 schliesst über ein Antriebsrad 8 ein Regelungsmotor 9 einer Regelunseinrichtung an, welcher eine Drehbewegung auf die Spindel 2 überträgt. Durch die Drehbewegung der Spindel 2 wird der Gashebel 6 entlang des Führungsschlitzes 7 linear hin und her bewegt.

Dem Regelungsmotor 9 bzw. der Regelungseinrichtung ist ein weiteres Wegmesssystem 3.2 zugeordnet, welches über hier nicht bezifferte Verbindungsleitungen mit einer Steuerung 14 in Verbindung steht.

Auf diese Weise lässt sich über die Stellung der Regelungseinrichtung bzw. des Regelungsmotors 9 exakt ein Rückschluss auf die tatsächliche Stellung und des tatsächlichen Betriebszustandes des Triebwerkes schliessen.

Zur Unterstützung der Antriebsbewegung der Spindel 2 und insbesondere der linearen Bewegung bei manueller Betätigung des Gashebels 6 ist dem Gashebel 6 und/oder der Führungsbuchse 5 ein Kraftsensor 13 zugeordnet.

Wird der Gashebel 6 entsprechend, wie in Doppelpfeilrichtung dargestellt mit einer Kraft F bewegt, so wird die Regelungseinrichtung 9 zugeschaltet und betätigt die Spindel 2, damit eine Bewegung und eine automatisch geführtes Bewegen des Gashebels 6 möglich ist.

Der Pilot muss keinesfalls manuell mit eigener Kraft die Spindel 2 in entsprechende Drehung zu versetzen, um ein Betriebszustand eines anschliessenden Triebwerkes zu verändern.

Die Funktionswiese der vorliegenden Erfindung ist folgende:

Wird bspw. mittels eines Autopiloten ein Flugzeug betrieben, so wird mittels des Regelungsmotors 9 der Gashebel 6 entsprechend der Steuerung des Flugzeuges mitbewegt, so dass der Pilot in jeder Lage den Betriebszustand eines Triebwerkes anhand der Position des Gashebels 6 im Führungsschlitz 7 erkennt.

Gleichzeitig wird bei einem manuellen Betrieb entweder über den Regelungsmotor 9 und/oder über das Wegmesssystem 3.1, 3.2 ein Betriebszustand an einen hier nicht dargestellten Rechner des Flugzeuges übermittelt, welcher dann das entsprechende Triebwerk steuert.

Insbesondere ist von Vorteil bei der vorliegenden Erfindung, dass manuell der Gashebel 6 bspw. bei einem Ausfall des Regelungsmotors 9 betätigt werden kann und dass der Pilot auf Grund der spindelgelagerten Position des Gashebels 6 erkennt, in welchem Betriebszustand sich das Triebwerk befindet.

Er kann manuell rein mechanisch den Gashebel 6 verschieben, wodurch sich die Spindel 2 verdreht. Diese Drehbewegung wird im Wegmesssystem 3.1, 3.2 ermittelt und an den entsprechenden Rechner zur Steuerung des Triebwerkes weitergeleitet.

Daher ist auch bspw. bei einem Energieausfall eine Übermittlung des elektrischen Signales vom Wegmesssystem 3.1, 3.2 zum Triebwerk noch möglich. Dies ist bei der vorliegenden Erfindung von elementarer Bedeutung, da die Sicherheit des Flugzeuges mit einer entsprechenden Vorrichtung zum Betreiben eines Triebwerkes erheblich erhöht wird.

Bei einem elektrischen Ausfall des Systemes findet keine Selbsthemmung statt. Der Gashebel 6 kann manuell von Hand bewegt werden, wobei die ursprüngliche Position und Stellung des Betriebszustandes des Triebwerkes in jeder Lage ersichtlich ist.

Eine Selbsthemmung ist deshalb ausgeschlossen, da die Spindel 2 als eine Trapez-Gewinde-Spindel mit einer hohen Steigung ausgebildet ist. Diese weist ferner eine hohe Steifigkeit, insbesondere auch Biege- und Torsionssteifigkeit auf. Sie lässt keine Torosionsbiegungen sowie Kippmomente zu. Daher kann sie sehr präzise durch die lineare Bewegung des Gashebels 6 über die Führungsbuchse 5 ohne jeglicher Gefahr der Selbsthemmung manuell verdreht werden, um den Wegmesssystemen 3.1, 3.2 direkt oder indirekt durch eine manuelle Bewegung das elektrische Signal zur Steuerung des Triebwerkes übermitteln.

Die Steuerung 14 übernimmt zumindest teilweise die geführte Bewegung des Gashebels 6 bzw. der Führungsbuchse 5, wenn bspw. der Kraftsensor 13 betätigt ist. Dann schaltet entsprechend der Regelungsmotor 9 hinzu, um die manuelle Bewegung des Gashebels 6 elektrisch zu unterstützen. Die Steuerung 14 kann externer Bestandteil des Gehäuses 1 bzw. der Regelungseinrichtung 9 sein. Dies soll vom vorliegenden Erfindungsgedanken umfasst sein.

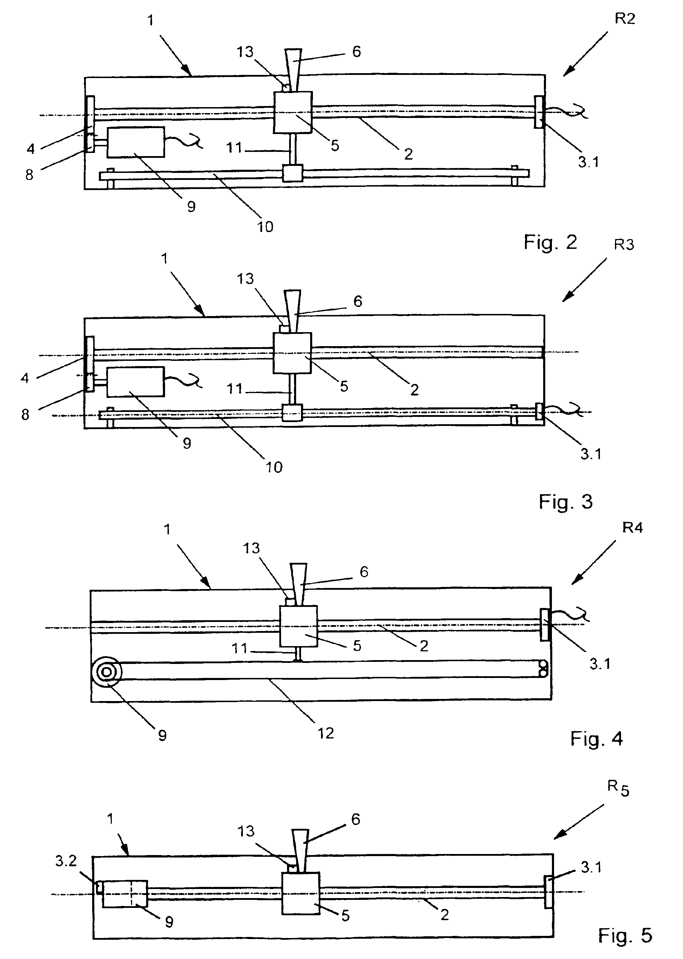

In dem Ausführungsbeispiel der vorliegenden Erfindung gemäss Figur 2 ist eine Vorrichtung R₂ aufgezeigt, bei welcher in o. b. Weise im Gehäuse 1 die Spindel 2 drehbar gelagert angeordnet ist, wobei einends das Wegmesssytem 3.1, 3.2 zur Messung der Drehungen der Spindel 2 und andernends die Antriebsscheibe 4 angeordnet sind. Die Antriebsscheibe 4 wird über das Antriebsrad 8 mittels des Regelungsmotores 9 mit Wegmesssystem 3.2, in o. b. Weise bspw. beim Betrieb mittels des Autopilotens gesteuert. Dem Gashebel 6 und/oder der Führungsbuchse 5 ist der Kraftsensor 13 zugeordnet, welcher wie oben beschrieben, mit der Steuerung 14 in Verbindung steht.

Unterschiedlich zu dem Ausführungsbeispiel gemäss Figur 1 ist, dass ein Führungsschlitz 7 entfallen kann, wobei eine lineare Führung über ein lineares Führungselement 10 möglich ist, wenn die Führungsbuchse 5 oder der Gashebel 6 mit dem Führungselement 10 bspw. über ein Verbindungsglied 11 gekoppelt sind. Dabei verläuft das Führungselement 10 in etwa parallel zur Spindel 2.

Gemäss Figur 3 weist eine Vorrichtung R₃ ein Gehäuse 1 auf, in welchem, wie o. b., eine Spindel 2 drehbar gelagert ist. Endseits ist an der Spindel 2 die Antriebsscheibe 4 angeordnet, die über das Antriebsrad 8 des Regelungsmotors 9 mit Wegmesssystem 3.2 drehbar ist. Der Gashebel 6 sitzt mit seiner Führungsbuchse 5 auf der Spindel 2, wobei die Führungsbuchse 5 mit der Spindel 2 im Eingriff steht.

An die Führungsbuchse 5 oder den Gashebel 6 schliesst sich das Verbindungsglied 11 an und sitzt über eine weitere hier nicht bezifferte Führungsbuchse auf einer als Führungselement 10 ausgebildeten Spindel 2, an deren Ende das Wegmesssystem 3.1 vorgesehen ist.

Dabei wird das Führungselement 10 beim linearen Bewegen des Gashebels 6 entsprechend verdreht, so dass diese Drehbewegung im Wegmesssystem 3.1, 3.2 ermittelt wird und ein elektrisches Signal direkt oder indirekt an das Triebwerk weiterleitet. Dabei soll im Rahmen der vorliegenden Erfindung liegen, dass auch das Wegmessystem 3.1 entlang des Führungselementes 10 bspw. als Magnetstreifenelement od dgl. ausgebildet sein kann, um beim entsprechenden linearen Verschieben bzw. Bewegen des Gashebels 6 ein Signal entsprechend an das Triebwerk oder an den Rechner des Triebwerkes weiterzuleiten.

In dem Ausführungsbeispiel der vorliegenden Erfindung gemäss Figur 4 ist eine Vorrichtung R₄ aufgezeigt, die im Wesentlichen im Aufbau gemäss Figur 3 entspricht. Unterschiedlich ist, dass der Regelungsmotor 9 ein Antriebsmittel 12 betreibt, welches über das Verbindungsglied 11 mit der Führungsbuchse 5 des Gashebels 6 im Eingriff steht.

Hierdurch lässt sich automatisch bspw. im Betrieb mittels des Autopiloten der Gashebel 6 entsprechend des Betriebszustandes des Triebwerkes steuern. Dabei kann das Antriebsmittel 12 eine Kette ein Zahnriemen od. dgl. Element sein. Der Erfindung sei hier keine Grenze gesetzt.

Gemäss Figur 5 ist eine Vorrichtung R₅ aufgezeigt, bei welcher in einem Gehäuse 1 entsprechend in oben beschriebener Weise auf der Spindel 2 die Führungsbuchse 5 linear mittels des Gashebels 6 geführt ist. Dem Gashebel 6 und/oder der Führungsbuchse 5 ist der Kraftsensor 13 zugeordnet, welcher ebenfalls mit der nicht dargestellten Steuerung 14 in Verbindung steht.

Hier schliesst direkt die Regelungseinrichtung 9, insbesondere der Regelungsmotor an die Spindel 2 an. Ggf. ist wie gestrichelt angedeutet, ein Getriebe vorgeschaltet.

Andernends sitzt auf der Spindel 2 in oben beschriebener Weise das Wegmesssystem 3.1. Ferner ist der Regelungseinrichtung 9 ebenfalls, wie oben beschrieben, das Wegmesssystem 3.2 zugeordnet. Der Gashebel 6 wird im Gehäuse 1 entsprechend Figur 1 linear geführt.

**Positionszahlenliste**

| | | | | | |
|---|---|---|---|---|---|
| 1 | Gehäuse | 34 | | 67 | |
| 2 | Spindel | 35 | | 68 | |
| 3 | Wegmesssystem | 36 | | 69 | |
| 4 | Antriebsscheibe | 37 | | 70 | |
| 5 | Führungsbuchse | 38 | | 71 | |
| 6 | Gashebel | 39 | | 72 | |
| 7 | Führungsschlitz | 40 | | 73 | |
| 8 | Antriebsrad | 41 | | 74 | |
| 9 | Regelungseinrichtung | 42 | | 75 | |
| 10 | Führungselement | 43 | | 76 | |
| 11 | Verbindungsglied | 44 | | 77 | |
| 12 | Antriebsmittel | 45 | | 78 | |
| 13 | Kraftsensor | 46 | | 79 | |
| 14 | Steuerung | 47 | | | |
| 15 | | 48 | | | |
| 16 | | 49 | | R₁ | Vorrichtung |
| 17 | | 50 | | R₂ | Vorrichtung |
| 18 | | 51 | | R₃ | Vorrichtung |
| 19 | | 52 | | R₄ | Vorrichtung |
| 20 | | 53 | | R₅ | Vorrichtung |
| 21 | | 54 | | | |
| 22 | | 55 | | F | Kraft |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Steuern eines Triebwerkes, insbesondere eines Flugzeuges mit zumindest einem Gashebel (6) und einer Regelungseinrichtung (9) zum zusätzlichen automatischen Antreiben des Gashebels (6), wobei eine Bewegung des Gashebels (6) permanent, direkt oder indirekt auf ein Wegmesssystem (3.1, 3.2) übertragbar und der Gashebel (6) über eine Führungsbuchse (5) einer drehbaren Spindel (2) linear bewegbar gelagert aufsitzt, wobei die Spindel (2) als nicht selbsthemmende Spindel (2) mit hoher Steigung ausgebildet ist, und eine lineare, manuelle Bewegung des Gashebels (6) auf das Wegmesssystem (3.1, 3.2) mechanisch übertragbar ist, und eine lineare, mechanische und automatische Bewegung des Gashebels (6) mechanisch an die Bewegung des Wegmesssystems (3.1, 3.2) gekoppelt ist, und der Gashebel (6) linear in einem Führungsschlitz (7) eines Gehäuses (1) geführt ist, welcher in etwa parallel zur Spindel (2) angeordnet ist,
**dadurch gekennzeichnet,**
**dass** zur Unterstützung einer manuellen, linearen Bewegung des Gashebels (6) die Regelungseinrichtung (9) auf ein Signal eines Kraftsensors (13) einschaltbar ist und der Kraftsensor (13) dem Gashebel (6) und/oder der Führungsbuchse (5) zugeordnet ist.

2. Vorrichtung nach Anspruch 1, **dadurch gekennzeichnet, dass** durch eine lineare Bewegung des Gashebels (6) die Spindel (2) entsprechend der Bewegung der Führungsbuchse (5) drehbar gelagert ist.

3. vorrichtung nach Anspruch 1 oder 2, **dadurch gekennzeichnet, dass** einends an der Spindel (2) das Wegmesssystem (3.1) angeordnet ist.

4. Vorrichtung nach wenigstens einem der Ansprüche 1 bis 3, **dadurch gekennzeichnet, dass** andernends der Spindel (2) die Regelungseinrichtung (9) als Regelungsmotor mit ggf. einem zugeordneten Wegmesssystem (3.2) direkt oder indirekt angreift.

5. Vorrichtung nach wenigstens einem der Ansprüche 1 bis 4, **dadurch gekennzeichnet, dass** einends an der Spindel (2) eine Antriebsscheibe (4) angeordnet ist.

6. Vorrichtung nach Anspruch 5, **dadurch gekennzeichnet, dass** der Regelungsmotor (9) mit der Antriebsscheibe (4) in Verbindung steht.

7. Vorrichtung nach wenigstens einem der Ansprüche 1 bis 6, **dadurch gekennzeichnet, dass** der Gashebel (6) direkt oder indirekt mit einem Führungselement (10) verbunden ist, welches in etwa parallel zur Spindel (2) verläuft.

8. Vorrichtung nach wenigstens einem der Ansprüche 1 bis 7, **dadurch gekennzeichnet, dass** das Wegmesssystem (3.1, 3.2) als Wegaufnehmer von induktiver, magnetischer oder optischer Art ist.

9. Vorrichtung nach wenigstens einem der Ansprüche 1 bis 8, **dadurch gekennzeichnet, dass** das Wegmesssystem (3.1, 3.2) und/oder der Kraftsensor (13) und/oder die Regelungseinrichtung (9) mit einer Steuerung (14) in Verbindung steht, um eine manuelle Bewegung des Gashebels (6) durch Hinzuschalten der Regelungseinrichtung (9) zu unterstützen, wobei die jeweiligen Positionen des Gashebels (6) entsprechend des Betriebszustandes über die Wegmesssysteme (3.1, 3.2) an ein Triebwerk weiterleitbar sind.

## Claims

1. Apparatus for controlling an engine, more especially an aircraft, said apparatus having at least one throttle lever (6) and one regulating means (9) for the additional automatic driving of the throttle lever (6), a movement of the throttle lever (6) being transmittable permanently, directly or indirectly to a range measuring system (3.1, 3.2), and the throttle lever (6) resting above a guide bush (5) of a rotatable spindle (2) in a linearly displaceably mounted manner, the spindle (2) being in the form of a non-self-locking spindle (2) with a high pitch, and a linear, manual movement of the throttle lever (6) being mechanically transmittable to the range measuring system (3.1, 3.2), and a linear, mechanical and automatic movement of the throttle lever (6) being linked mechanically to the movement of the range measuring system (3.1, 3.2), and the throttle lever (6) being guided linearly in a guide slot (7) of a housing (1), which is disposed substantially parallel to the spindle (2), **characterised in that**, to assist a manual, linear movement of the throttle lever (6), the regulating means (9) can be switched-on in response to a signal from a force sensor (13), and the force sensor (13) is associated with the throttle lever (6) and/or the guide bush (5).

2. Apparatus according to claim 1, **characterised in that**, due to a linear movement of the throttle lever (6), the spindle (2) is mounted so as to be rotatable in accordance with the movement of the guide bush (5).

3. Apparatus according to claim 1 or 2, **characterised in that** the range measuring system (3.1) is disposed at one end on the spindle (2).

4. Apparatus according to at least one of claims 1 to 3, **characterised in that** the regulating means (9), in the form of a regulating motor with possibly one associated range measuring system (3.2), co-operates directly or indirectly with the other end of the spindle (2).

5. Apparatus according to at least one of claims 1 to 4, **characterised in that** a driving disc (4) is disposed at one end on the spindle (2).

6. Apparatus according to claim 5, **characterised in that** the regulating motor (9) communicates with the driving disc (4).

7. Apparatus according to at least one of claims 1 to 6, **characterised in that** the throttle lever (6) is directly or indirectly connected to a guide element (10), which extends substantially parallel to the spindle (2).

8. Apparatus according to at least one of claims 1 to 7, **characterised in that** the range measuring system (3.1, 3.2) is in the form of a travel sensor of an inductive type, a magnetic type or an optical type.

9. Apparatus according to at least one of claims 1 to 8, **characterised in that** the range measuring system (3.1, 3.2) and/or the force sensor (13) and/or the regulating means (9) communicate/communicates with a control system (14) in order to assist a manual movement of the throttle lever (6) by additionally switching the regulating means (9), the respective positions of the throttle lever (6) being able to be passed-on to an engine via the range measuring systems (3.1, 3.2) in accordance with the operational state.

## Revendications

1. Dispositif pour commander un groupe moteur, en particulier d'un avion, avec au moins un levier à gaz (6) et un dispositif de régulation (9) destiné à l'actionnement automatique additionnel du levier à gaz (6), un mouvement du levier à gaz (6) pouvant être transmis en permanence, directement ou indirectement, à un système de mesure de chemin (3.1, 3.2) et le levier à gaz (6) étant placé monté déplaçable linéairement par l'intermédiaire d'une douille de guidage (5) d'un axe rotatif (2), l'axe étant réalisé sous forme d'axe (2) non autobloquant à grande montée et un mouvement linéaire manuel du levier à gaz (6) pouvant être transmis mécaniquement au système de mesure de chemin (3.1, 3.2) et un mouvement linéaire mécanique et automatique du levier à gaz (6) étant couplé au mouvement du système de mesure de chemin (3.1, 3.2) et le levier à gaz (6) étant guidé linéairement dans une fente de guidage (7) d'un boîtier (1) disposée environ parallèlement à l'axe (2),
**caractérisé par le fait**
**que**, pour supporter un mouvement manuel linéaire du levier à gaz (6), le dispositif de régulation (9) peut être enclenché sur un signal d'un capteur de force (13) et que le capteur de force (13) est associé au levier à gaz (6) et/ou à la douille de guidage (5}.

2. Dispositif selon la revendication 1, **caractérisé par le fait que**, par un mouvement linéaire du levier à gaz (6), l'axe (2) est monté de manière rotative selon le mouvement de la douille de guidage (5).

3. Dispositif selon la revendication 1 ou 2, **caractérisé par le fait qu'**à une extrémité de l'axe (2) est disposé le système de mesure de chemin (3.1).

4. Dispositif selon au moins l'une des revendications 1 à 3, **caractérisé par le fait qu'**à l'autre extrémité de l'axe (2) vient en prise, directement ou indirectement, le dispositif de régulation (9) sous forme de moteur de régulation avec éventuellement un système de mesure de chemin (3.2) associé.

5. Dispositif selon au moins l'une des revendications 1 à 4, **caractérisé par le fait qu'**à une extrémité de l'axe (2) est disposé un disque d'entraînement (4).

6. Dispositif selon la revendication 5, **caractérisé par le fait que** le moteur de régulation (9) est en communication avec le disque d'entraînement (4).

7. Dispositif selon au moins l'une des revendications 1 à 6, **caractérisé par le fait que** le levier à gaz (6) est relié, directement ou indirectement, à un élément de guidage (10) qui s'étend environ parallèlement à l'axe (2).

8. Dispositif selon au moins l'une des revendications 1 à 7, **caractérisé par le fait que** le système de mesure de chemin (3.1, 3.2) est réalisé sous forme d'enregistreur de chemin de type inductif, magnétique ou optique.

9. Dispositif selon au moins l'une des revendications 1 à 8, **caractérisé par le fait que** le système de mesure de chemin (3.1, 3.2) et/ou le capteur de force (13) et/ou le dispositif de régulation (9) est en communication avec une commande (14), pour supporter un mouvement manuel du levier à gaz (6) par l'addition du dispositif de régulation (9), les positions respectives du levier à gaz (6) pouvant être transmises à un groupe moteur, par l'intermédiaire des systèmes de mesure de chemin (3.1, 3.2), en fonction de l'état de fonctionnement.
